Europäisches Patentamt

European Patent Office

Office européen des brevets

(19)

(11) **EP 1 403 653 A1**

(12) **DEMANDE DE BREVET EUROPEEN**

(43) Date de publication:
**31.03.2004 Bulletin 2004/14**

(51) Int Cl.⁷: **G01S 5/02**, E05B 49/00, B60R 25/00

(21) Numéro de dépôt: **03021713.7**

(22) Date de dépôt: **25.09.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **30.09.2002 FR 0212090**

(71) Demandeur: **Valeo Securite Habitacle S.A.S.
94042 Créteil cedex (FR)**

(72) Inventeurs:
• **Derouet, Hugues
  94042 Creteil Cedex (FR)**
• **Haydar, Adham
  93230 Romainville (FR)**

(74) Mandataire: **Hervouet, Sylvie
Valeo Sécurité Habitacle S.A.S.
42, rue Le Corbusier
Europarc
94042 Créteil Cedex (FR)**

(54) **Procédé et dispositif de commande à distance de condamnation/decondamnation d'ouvrants d'un vehicule automobile**

(57) La présente invention concerne un procédé et un dispositif de commande à distance de condamnation/décondamnation d'ouvrants de véhicule automobile, destiné à déjouer les piratages utilisant des valises relais.

Le dispositif comporte plusieurs antennes (3, 4), chacune émettant lors du traitement de la commande un signal vers un badge identifiant (2).

Celui-ci, muni de moyens de calculs, détermine les vecteurs de champ ($V_1, V_2$) des signaux reçus, ainsi que son assiette, puis transmet ces résultats à la base installée dans le véhicule (1).

La base effectue alors des tests de cohérence, entre l'assiette du badge identifiant reçue et l'assiette du véhicule calculée d'autre part, ainsi que sur les vecteurs champ calculés par le badge identifiant.

Si les signaux sont passés par des relais pirates (10, 11), la cohérence ne sera pas vérifiée et la commande ne sera pas traitée.

Dans le cas contraire, la condamnation/décondamnation des ouvrants du véhicule aura bien lieu.

**Fig. 1**

EP 1 403 653 A1

# Description

La présente invention concerne un procédé et un dispositif de commande à distance de condamnation/décondamnation d'ouvrants de véhicule automobile.

Dans les systèmes centralisés de condamnation d'ouvrants de véhicules automobiles, un dispositif portable porté par un utilisateur communique avec une base installée dans le véhicule pour autoriser des actions telles que la condamnation ou la décondamnation des ouvrants.

La communication peut être provoquée par l'utilisateur à partir du badge identifiant ou être déclenchée automatiquement lorsque l'utilisateur s'approche du véhicule ou s'en éloigne, ou lorsqu'il actionne une poignée d'un des ouvrants du véhicule.

Dans ces derniers cas, le système centralisé est baptisé « mains libres », car l'utilisateur ne se préoccupe plus de demander la condamnation ou la décondamnation des ouvrants.

Mais quel que soit le système concerné, il se produit un échange de signaux successifs entre le dispositif portable et la base, notamment pour vérifier que l'utilisateur à l'origine de la commande est bien en possession d'un dispositif portable ou d'un badge authentique.

Lorsque les échanges de signaux empruntent un canal hertzien, on comprend qu'il existe une certaine vulnérabilité du fait que les signaux peuvent être interceptés soit pour modification, soit pour enregistrement, afin d'être ultérieurement reproduits dans le but de leurrer la base, et obtenir le déclenchement d'actions en l'absence du badge identifiant authentique.

On lutte contre ces tentatives d'effraction en cryptant les signaux échangés. Cependant, le cryptage ne remédie pas aux violations du système de condamnation consistant à disposer des relais entre le dispositif portatif et le véhicule, pour réduire artificiellement la distance existant entre ces derniers et utiliser le dispositif portatif à l'insu de son propriétaire pour décondamner les ouvrants du véhicule.

Les systèmes mains libres sont plus particulièrement exposés à ce genre de piratage car aucune action n'est requise sur le dispositif portatif, lequel réagit automatiquement à une sollicitation de la base, elle-même déclenchée par une action sur le véhicule, comme une manoeuvre de poignée d'ouvrant.

De manière plus précise, on réalise ce piratage en plaçant une première valise relais à proximité du véhicule et une seconde valise relais à proximité du badge identifiant. Les deux valises relais communiquent entre elles, la première étant perçue par la base comme étant le badge identifiant et la seconde étant perçue par le badge identifiant comme étant la base, de sorte que le système croit l'utilisateur proche du véhicule et exécute à tort les décondamnations demandées. Cette opération s'effectue bien entendu à l'insu du porteur du badge.

On a déjà cherché à remédier à un tel piratage en calculant les temps de communication des signaux entre le badge identifiant et la base, un temps trop long étant considéré comme suspect.

Cependant, des valises relais performantes peuvent réduire la durée du transfert d'une valise à l'autre et masquer le relayage.

La présente invention vise à proposer une solution renforçant la protection vis-à-vis de ce type de piratage.

La présente invention a pour objet un procédé de traitement d'une commande de condamnation/décondamnation d'ouvrants de véhicule automobile, caractérisé par les étapes suivantes :

-    émission à partir d'au moins deux antennes distinctes placées sur le véhicule d'un signal à destination d'un badge identifiant,
-    réception des signaux provenant de chacune des deux antennes par le badge identifiant,
-    calcul du vecteur de champ de chacun des signaux allant d'une antenne au badge identifiant,
-    calcul de l'assiette du badge identifiant et de l'assiette du véhicule,
-    vérification de cohérence entre les vecteurs champ calculés et les assiettes calculées,
-    si et seulement si la cohérence est vérifiée, exécution de la commande demandée.

Grâce à l'invention, des valises de relayage qui pourraient déjouer une protection d'anti-piratage par contrôle des temps de communication seraient détectées car les vecteurs champ calculés pour les signaux parvenant au badge identifiant ne devraient pas être cohérents selon qu'ils sont perçus depuis le véhicule ou depuis le badge identifiant s'ils sont relayés par des valises.

La présente invention a également pour objet un dispositif de commande à distance de condamnation/décondamnation des ouvrants d'un véhicule automobile, qui est caractérisé en ce qu'il comporte, d'une part, une base installée dans le véhicule et incluant des moyens de calcul de l'assiette du véhicule ainsi qu'au moins deux antennes d'émission de signaux disposées sur le véhicule, d'autre part, un badge identifiant muni d'une antenne tridimensionnelle et de moyens de calcul du vecteur de champ d'un signal reçu par ladite antenne tridimensionnelle ainsi que de moyens de calcul de son assiette et de moyens de transmission à la base des vecteurs de champ et de l'assiette calculés, la base étant munie de moyens de vérification de cohérence entre d'une part les assiettes de l'identifiant et du véhicule, et, d'autre part, les vecteurs de champ calculés par l'identifiant.

Afin de faciliter la compréhension de l'invention, on va maintenant en décrire des exemples de mise en oeuvre à l'aide des dessins annexés qui ne sont fournis qu'à titre d'illustrations et ne présentent aucun caractère limitatif.

La figure 1 est une vue en perspective d'un véhicule automobile et d'un badge identifiant,

la figure 2 est une vue schématique de la figure 1,
la figure 3 est une vue de dessus de la figure 2,
la figure 4 est une vue en élévation de la figure 2,
la figure 5 est une vue prise de l'arrière du véhicule de la figure 2.

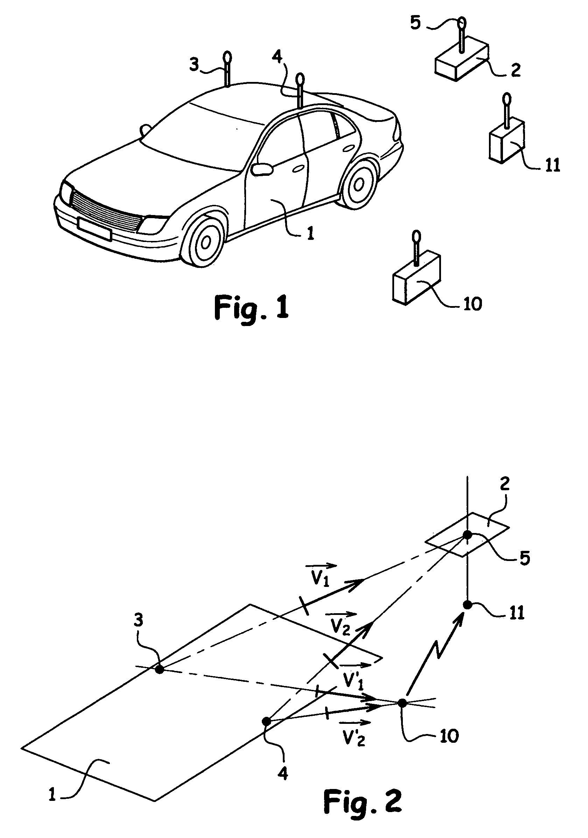

Sur la figure 1, un véhicule automobile 1 est représenté en perspective de trois quart arrière et un badge identifiant 2 est maintenu (par un utilisateur non représenté) en position horizontale à l'avant du véhicule.

Le véhicule comporte deux antennes d'émission 3, 4 raccordées à une base (non représentée) appartenant au système « mains libres » du véhicule.

L'ensemble de ces éléments peut être schématisé comme représenté à la figure 2, où le véhicule est représenté par un plan horizontal matérialisant son assiette. De même, le badge identifiant est représenté par un plan horizontal matérialisant son assiette.

Dans le contexte d'une vérification d'identité résultant d'une commande de condamnation ou de décondamnation, cette commande émanant de l'utilisateur de manière explicite ou implicite, la base émet successivement deux signaux à destination du badge identifiant. Chaque signal est émis par une des deux antennes d'émission 3, 4, disposées sur le véhicule.

Par ailleurs, des moyens, par exemple gyroscopiques, permettent au véhicule de calculer son assiette, c'est-à-dire son orientation par rapport à l'horizontale.

Le badge identifiant 2 comporte une antenne de réception 5. Cette antenne possède la propriété d'être capable d'identifier en trois dimensions l'origine des émissions reçues, de sorte que le badge est apte à fournir les coordonnées du vecteur de champ correspondant.

C'est ainsi que le badge identifiant est capable de calculer les coordonnées des vecteurs de champ V1 et V2 issus respectivement des antennes 3 et 4.

Par ailleurs, le bade identifiant 2 incorpore des moyens (non représentés) lui permettant de calculer sa propre assiette (par exemple gyroscopique), c'est-à-dire sa propre orientation par rapport au plan horizontal.

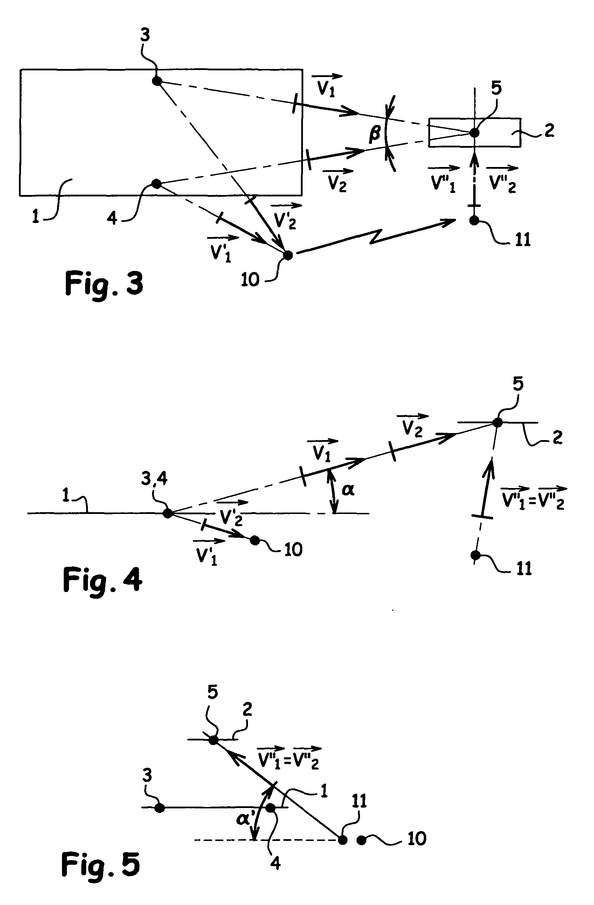

Comme on le voit sur les vues de dessus et en élévation des figures 3 et 4 qui sont des projections, les vecteurs de champ V1 et V2 peuvent être définis, vus du badge identifiant, comme formant un angle $\alpha$, avec l'horizontale et formant entre eux un angle $\beta$.

En réponse aux signaux reçus du véhicule, le badge identifiant 2 émet à son tour un signal vers la base en transmettant les valeurs calculées de son assiette et des vecteurs de champ V1 et V2.

Des moyens de calcul incorporés dans la base effectuent un test de cohérence entre d'une part, l'assiette du badge identifiant reçu et l'assiette du véhicule précédemment calculée et d'autre part, les vecteurs champ calculés par le badge identifiant.

De façon plus détaillée, les paramètres dont dispose la base pour vérifier la cohérence sont les suivants :

Soit $V_v$ le vecteur normé du véhicule. Ce vecteur fournit l'orientation du véhicule par rapport à un référentiel terrestre.

Si le vecteur normé du sol par rapport au même référentiel terrestre est $V_s$, alors on a:

$$(1) \qquad V_v = t . V_s$$

(les . indiquent des produits de convolution)

Par rapport au véhicule, chaque antenne 3, 4 émet un signal dans un champ $V_1$, respectivement $V_2$, qui peut s'écrire :

$$(2) \qquad V_{3e} = a.V_v$$

$$(3) \qquad V_{4e} = b.V_v,$$

de sorte que $V_1$ et $V_2$ et sont liés par une relation

$$(4) \qquad V_{3e} = f(V_{4e})$$

Le véhicule reçoit de l'identifiant 2 un signal dont le champ peut s'écrire :

$$(5) \qquad V_{2r} = c.V_v, \text{ d'où}$$

$$(6) \qquad V_{2r} = c.t.V_s$$

Le badge identifiant connaît sa propre orientation, qui peut s'exprimer par le vecteur normé $V_i$, lequel peut s'écrire :

$$(7) \qquad V_i = s.V_v$$

Par rapport au badge identifiant, les champs des signaux provenant des antennes 3 et 4 peuvent s'écrire :

$$(8) \qquad V_{3r} = d.V_i \text{ et}$$

$$(9) \qquad V_{4r} = e.V_i$$

de sorte que l'on a la relation

$$(10) \qquad V_{3r} = g(V_{4r})$$

Et toujours par rapport au badge identifiant, le signal émis par ledit badge vers le véhicule satisfait :

$$(11) \qquad V_{2e} = h.V_i, \text{ d'où}$$

$$(12) \qquad V_{3e} = h.s.V_s$$

Le véhicule connaît par mesure les champs $V_v$, $V_{3e}$, $V_{4e}$, $V_{2r}$, et peut vérifier (1), (2), (3), (4), (5), (6).

Il reçoit $V_i$ du badge et peut par conséquent vérifier la cohérence avec (7), (8), (9), (10), (11), (12).

Sur la figure 1, on a également représenté deux valises relais 10, 11 qu'un cambrioleur tenterait d'utiliser pour décondamner les ouvrants du véhicule en utilisant le badge identifiant 2 alors que ce dernier se trouve éloigné du véhicule 1.

Une première valise 10 est placée à proximité du véhicule et reçoit les deux signaux émis à destination du badge identifiant. Elle transmet ces deux signaux à la seconde valise 11 qui est placée à proximité du badge identifiant 2 et ré-émet les deux signaux de manière que le badge identifiant puisse les percevoir.

On voit que le badge identifiant ne peut calculer les vecteurs de champ que tels qu'il les perçoit.

Il faut envisager deux hypothèses.

1. Première hypothèse.

La paire de valises 10, 11 se contente de servir de relais sans reconstituer les champs électromagnétiques créés par les deux antennes du véhicule. Dans ce cas, le badge identifiant 2 ne perçoit que les émissions provenant de l'antenne de la seconde valise 11.

En conséquence, le badge identifiant calcule deux vecteurs de champ $V''_1$, $V''_2$ identiques ayant pour caractéristiques :

- angle formé avec l'horizontale : $\alpha'$
- angle formé entre les deux vecteurs de champ : $\beta' = \varnothing$.

En soit, cette valeur nulle de l'angle formé par les deux vecteurs de champ suffit à la base pour déceler que la transmission du signal vers le badge identifiant a été relayée.

En conséquence, la base abandonne le traitement en cours et l'action de condamnation/décondamnation demandée n'est pas effectuée.

2. Deuxième hypothèse.

La première valise 10 est apte à calculer les vecteurs de champ $V'_1$, $V'_2$ qu'elle reçoit et à les transmettre à la seconde valise, laquelle reconstitue les champs électromagnétiques d'origine de sorte que le badge identifiant calcule des vecteurs de champ identiques à ceux $V'_1$, $V'_2$ perçus par la première valise.

En retour, le badge identifiant transmet à la base les caractéristiques des vecteurs de champ calculés ainsi que sa propre assiette.

La base peut donc comparer les données suivantes :

- positions possibles du badge par rapport au véhicule (B) et orientation du badge par rapport au sol (données calculées par le badge et transmises de manière cryptée à la base).
- positions du badge par rapport au véhicule et orientation du badge par rapport au sol (données calculées par la base à partir des mesures sur le signal transmis par le badge.

L'incohérence se manifeste par une différence entre l'orientation du badge transmise par le badge et l'orientation du badge calculée par la base.

On voit que même dans l'hypothèse de deux valises particulièrement élaborées, le procédé selon l'invention permet de déceler le relayage.

Il est bien entendu que l'exemple décrit ci-dessus ne présente aucun caractère limitatif et qu'il pourrait recevoir toute modification désirée sans sortir pour cela du cadre de l'invention.

En particulier, l'invention concerne tout système de condamnation centralisé dans lequel une base communique avec un badge identifiant. Ainsi, non seulement les systèmes « mains libres », mais également des systèmes à commande à distance de décondamnation sont concernés par l'invention.

**Revendications**

1. Procédé de traitement d'une commande de condamnation/décondamnation d'ouvrants de véhicule automobile, **caractérisé par** les étapes suivantes :

   - émission à partir de deux antennes distinctes (3,4) placées sur le véhicule (1) d'un signal à destination d'un badge identifiant (2),
   - réception des deux signaux provenant des deux antennes (3, 4) par le badge identifiant (2),
   - calcul du vecteur de champ ($V_1$, $V_2$) de chacun des signaux allant d'une antenne au badge identifiant,
   - calcul de l'assiette du badge identifiant (2),
   - vérification de cohérence entre les vecteurs champ calculés et l'assiette calculée,
   - si et seulement si la cohérence est vérifiée, exécution de la commande demandée.

**2.** Dispositif de commande à distance de condamnation/décondamnation des ouvrants d'un véhicule automobile, **caractérisé en ce qu'**il comporte d'une part une base installée dans le véhicule (1) et incluant des moyens de calcul de l'assiette du véhicule ainsi qu'au moins deux antennes (3, 4) d'émission de signaux disposées sur le véhicule, d'autre part un badge identifiant (2) muni d'une antenne tridimensionnelle (5) et de moyens de calcul du vecteur de champ d'un signal reçu par ladite antenne tridimensionnelle, ainsi que de moyens de calcul de son assiette et de moyens de transmission à la base des vecteurs de champ et de l'assiette calculé, la base étant munie de moyens de vérification de cohérence entre d'une part les assiettes de l'identifiant et du véhicule, d'autre part les vecteurs de champ calculés par l'identifiant.

Fig. 1

Fig. 2

Fig. 3

Fig. 4

Fig. 5

**Office européen
des brevets**

**RAPPORT DE RECHERCHE EUROPEENNE**

Numéro de la demande

EP 03 02 1713

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 1 143 091 A (DELPHI TECH INC) 10 octobre 2001 (2001-10-10) * alinéas [0005]-[0013],[0020]; revendications 1,4; figures 1,2 * --- | 1,2 | G01S5/02 E05B49/00 B60R25/00 |
| A | FR 2 763 186 A (SIEMENS AG) 13 novembre 1998 (1998-11-13) * le document en entier * --- | 1,2 | |
| A | EP 1 189 306 A (LAND ROVER) 20 mars 2002 (2002-03-20) * alinéas [0004],[0008],[0025]-[0029],[0043],[0056]; figures 1,2 * --- | 1,2 | |
| A | EP 1 043 843 A (VALEO SECURITE HABITACLE) 11 octobre 2000 (2000-10-11) * le document en entier * ----- | 1,2 | |

**DOMAINES TECHNIQUES RECHERCHES (Int.Cl.7)**

G01S
E05B
B60R

Le présent rapport a été établi pour toutes les revendications

| Lieu de la recherche | Date d'achèvement de la recherche | Examinateur |
|---|---|---|
| MUNICH | 28 octobre 2003 | Mercier, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 03 02 1713

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-10-2003

| Document brevet cité au rapport de recherche | | Date de publication | Membre(s) de la famille de brevet(s) | | Date de publication |
|---|---|---|---|---|---|
| EP 1143091 | A | 10-10-2001 | FR | 2807588 A1 | 12-10-2001 |
|  |  |  | EP | 1143091 A1 | 10-10-2001 |
| FR 2763186 | A | 13-11-1998 | DE | 19718423 A1 | 05-11-1998 |
|  |  |  | FR | 2763186 A1 | 13-11-1998 |
|  |  |  | GB | 2326769 A | 30-12-1998 |
| EP 1189306 | A | 20-03-2002 | EP | 1189306 A1 | 20-03-2002 |
|  |  |  | GB | 2371137 A | 17-07-2002 |
|  |  |  | US | 2002033752 A1 | 21-03-2002 |
| EP 1043843 | A | 11-10-2000 | FR | 2792129 A1 | 13-10-2000 |
|  |  |  | EP | 1043843 A1 | 11-10-2000 |
|  |  |  | US | 6636728 B1 | 21-10-2003 |

EPO FORM P0460

Pour tout renseignement concernant cette annexe : voir Journal Officiel de l'Office européen des brevets, No.12/82